Europäisches Patentamt

European Patent Office

Office européen des brevets

(19)

(11) Veröffentlichungsnummer: **0 202 709**

**A2**

# EUROPÄISCHE PATENTANMELDUNG

(12)

(21) Anmeldenummer: **86200794.5**

(22) Anmeldetag: **06.05.86**

(51) Int. Cl.⁴: **G02F 1/09** , G02F 1/00

(30) Priorität: **17.05.85 DE 3517785**

(43) Veröffentlichungstag der Anmeldung:
**26.11.86 Patentblatt 86/48**

(84) Benannte Vertragsstaaten:
**DE FR GB NL SE**

(71) Anmelder: **Philips Patentverwaltung GmbH
Billstrasse 80
D-2000 Hamburg 28(DE)**
Anmelder: **N.V. Philips' Gloeilampenfabrieken
Groenewoudseweg 1
NL-5621 BA Eindhoven(NL)**

(72) Erfinder: **Tolksdorf, Wolfgang,
Prof.Dr.Dipl.-Chem.
Königsberger Strasse 34
D-2082 Tornesch(DE)**
Erfinder: **Bartels, Inske
Am Wall 5
D-2080 Pinneberg(DE)**
Erfinder: **Passig, Gerd
1. Bergredder 11
D-2000 Barsbüttel(DE)**

(74) Vertreter: **Nehmzow-David, Fritzi-Maria et al
Philips Patentverwaltung GmbH Billstrasse
80 Postfach 10 51 49
D-2000 Hamburg 28(DE)**

(54) **Vorrichtung zum Drehen der Polarisationsebene linear polarisierten Lichtes und Verfahren zu deren Herstellung.**

(57) Fokussierende, justierbare Vorrichtung zum Drehen der Polarisationsebene linear polarisierten Lichtes in Form einer unter Verwendung von in Durchstrahlungsrichtung vorzugsmagnetisiertem magnetischem Kristallmaterial hergestellten Kugellinse, wobei die Kugellinse aus zwei Kalotten mit parallel zueinander und senkrecht zur Durchstrahlungsrichtung des Lichtes ausgerichteten Grundflächen aus magnetischem Granatmaterial mit einem zwischen den Kalotten befindlichen Kugelteil aus optisch transparentem, nichtmagnetischem Granatmaterial besteht.

# Vorrichtung zum Drehen der Polarisationsebene linear polarisierten Lichtes und Verfahren zu deren Herstellung

Die Erfindung betrifft eine Vorrichtung zum Drehen der Polarisationsebene linear polarisierten Lichtes in Form einer unter Verwendung von in Durchstrahlungsrichtung vorzugsmagnetisiertem magnetischem Kristallmaterial hergestellten Kugellinse.

Die Erfindung bezieht sich weiter auf ein Verfahren zur Herstellung einer derartigen Vorrichtung und auf ihre Verwendung.

Vorrichtungen zum Drehen der Polarisationsebene linear polarisierten Lichtes aus magnetischem Kristallmaterial werden allgemein als Faraday-Rotatoren bezeichnet.

In optischen Kommunikationssystemen, die mit optischen Monomode-Wellenleitern und einer Lichtquelle, z.B. einer Laserdiode, arbeiten, sind passive Bauteile erforderlich wie zum Beispiel Linsen zur Fokussierung des eingestrahlten Lichtes oder zum Beispiel unter Verwendung eines Faraday-Rotators aufgebaute optische Isolatoren, die das Licht nur in einer Richtung passieren lassen, während sie die entgegengesetzte Richtung optisch sperren. Solche Isolatoren werden dazu eingesetzt, um die Lichtquelle, z.B. einen Laser, vor Störreflexionen aus dem angeschlossenen optischen System zu - schützen.

Die vorliegende Erfindung betrifft die Kombination zweier für den Aufbau eines optischen Kommunikationssystems mit Monomode-Wellenleiter und einer Lichtquelle in Form von zum Beispiel einer Laserdiode neben anderen eingesetzter passiver Bauteile, nämlich eine Kombination aus fokussierender Kugellinse und Faraday-Rotator für einen optischen Isolator.

Aus Electronics Letters 18 (1982), Nr. 24, Seiten 1026 bis 1028, ist eine Kombination dieser Wirkungsweisen in einem Bauteil bekannt, hier wird eine Kugellinse aus Yttrium-Eisen-Granat (YIG) nicht nur als Faraday-Rotator, sondern auch als Kopplungslinse in einem optischen Kommunikationssystem vorgeschlagen.

Kugellinsen aus YIG können nur unter relativ hohem Kostenaufwand hergestellt werden, da zunächst größere Einkristalle gezüchtet werden müssen, aus denen dann Kugeln geschliffen werden. Ein weiterer Nachteil ist, daß Yttrium-Eisen-Granat eine relativ geringe Faraday-Drehung hat; eine Kugellinse, die z.B. für Strahlung einer Wellenlänge = 1,3$\mu$m eingesetzt werden soll, verlangt einen Kugeldurchmesser von 2,1 mm und ist damit an die Abmessungen von derzeit benutzten optischen Wellenleitern nur unter erhöhtem Aufwand anpassbar. Ein weiterer Nachteil ist, daß zur Sättigungsmagnetisierung von YIG ein relativ hohes Magnetfeld erforderlich ist.

Faraday-Rotatoren aus magnetischem Granatmaterial wie z.B. Yttrium-Eisen-Granat $Y_3(Ga,Fe)_5O_{12}$ oder aus Wismutsubstituiertem Seltenerdmetall-Eisen-Granat, z.B. $(Gd,Bi)_3(Ga,Fe,Al)_5O_{12}$ zeichnen sich durch eine hohe Faraday-Rotation $\Theta_F$(°/cm) bei gleichzeitig geringen optischen Verlusten im nahen Infrarotspektralbereich aus, wobei die Faraday-Rotation bei Wismut-substituierten Eisen-Granaten erheblich größer ist als die von YIG (hierzu wird z.B. verwiesen auf G. Winkler, Magnetic Garnets, Vieweg, Braunschweig 1981, Seite 253 und folgende). Nachteilig an diesen Kristallen ist jedoch, daß ihre Faraday-Rotation infolge der Dispersion abhängig von der Wellenlänge des eingestrahlten Lichtes ist. Dies bedeutet z.B. für einen Isolator, daß die Sperrdämpfung, also die Fähigkeit, Störreflexionen aus einem optischen System zu unterdrücken, wellenlängenabhängig ist. Wird eine hohe Sperrdämpfung verlangt, so kann die Wellenlänge nur relativ wenig variiert werden. Der Faraday-Rotator und damit auch der mit ihm aufgebaute optische Isolator können daher nur in einem Spektralbereich geringer Bandbreite eingesetzt werden. Da der Spektralbereich im nahen Infrarot von etwa 0,8 bis 1,6$\mu$m für die optische Datenübertragung mit Hilfe von optischen Wellenleitern eine erhebliche Bedeutung erlangt hat, ist dies ein besonders gravierender Nachteil.

Der Erfindung liegt die Aufgabe zugrunde, eine Vorrichtung der eingangs genannten Art zu - schaffen, deren Faraday-Rotation im Wellenlängenbereich des nahen Infrarot (1,1 $\leq \lambda \leq$ 1,6) auf die Lichtwellenlänge einstellbar ist, die kostengünstig herzustellen ist und die in ihren Abmessungen gut an die Abmessungen der an sie anzukoppelnden optischen Wellenleiter anpaßbar ist.

Diese Aufgabe wird gemäß der Erfindung dadurch gelöst, daß die Kugellinse aus zwei Kalotten mit parallel zueinander und senkrecht zur Durchstrahlungsrichtung des Lichtes ausgerichteten Grundflächen aus magnetischem Granatmaterial mit einem zwischen den Kalotten befindlichen Kugelteil aus optisch transparentem, nichtmagnetischem Granatmaterial besteht.

Ein Verfahren zur Herstellung einer solchen Vorrichtung ist dadurch gekennzeichnet, daß auf den Hauptflächen eines Substrates aus optisch transparentem, nichtmagnetischem Granatmaterial epitaktisch Schichten jeweils gleicher Schichtdicke aus magnetischem Granatmaterial abgeschieden werden, daß das beschichtete Substrat in Würfel zersägt wird und daß die Würfel zu Kugeln geschliffen werden.

Nach vorteilhaften weiteren Ausgestaltungen der Erfindung bestehen die Kalotten aus vorzugsweise Wismut-dotiertem Seltenerdmetall-Eisen-Granat.

Vorzugsweise bestehen die Kalotten aus Seltenerdmetall-Eisen-Granat der allgemeinen Formel

$(Gd,Bi)_3(Fe,Ga,Al)_5O_{12}$.

Nach einer weiteren vorteilhaften Ausgestaltung der Erfindung besteht der zwischen den Kalotten befindliche Kugelteil aus nichtmagnetischem Granatmaterial, dessen Zusammensetzung der Formel entspricht $(A,B)_3(Ga,C,D)_5O_{12}$ mit

A = Gd und/oder Sm und/oder Y

B,C = Ca und/oder Sr und/oder Mg

D = Zr und/oder Sn.

Vorzugsweise besteht der zwischen den Kalotten befindliche Kugelteil aus nichtmagnetischem Granatmaterial entsprechend der Formel $(Gd,Ca)_3(Ga,Mg,Zr)_5O_{12}$.

Nach einer weiteren vorteilhaften Ausgestaltung der Erfindung haben die Kalotten eine solche maximale Gesamtschichtdicke, die ausreicht, die Polarisationsebene des eingestrahlten Lichtes um mehr als 45° zu drehen.

Die mit der Erfindung erzielten Vorteile bestehen insbesondere darin, daß ein fokussierender Faraday-Rotator, der für den Aufbau eines Faraday-Isolators eingesetzt werden kann, geschaffen ist, der justierbar, also auf unterschiedliche Wellenlängen eingestrahlten Lichtes einstellbar ist.

Dadurch, daß das magneto-optisch wirksame Material in Form von Epitaxieschichten eingesetzt wird, kann der erfindungsgemäße Faraday-Rotator in Form einer Kugellinse auch außerordentlich kostengünstig hergestellt werden.

Ein weiterer Vorteil ist, daß infolge der Verwendung von Wismut-dotiertem Eisen-Granat, der eine gegenüber z.B. YIG erhöhte Faraday-Drehung hat, relativ kleine Abmessungen, die gut zu den Abmessungen der anzukoppelnden optischen Wellenleiter passen, für den vorliegenden Faraday-Rotator gewählt werden können.

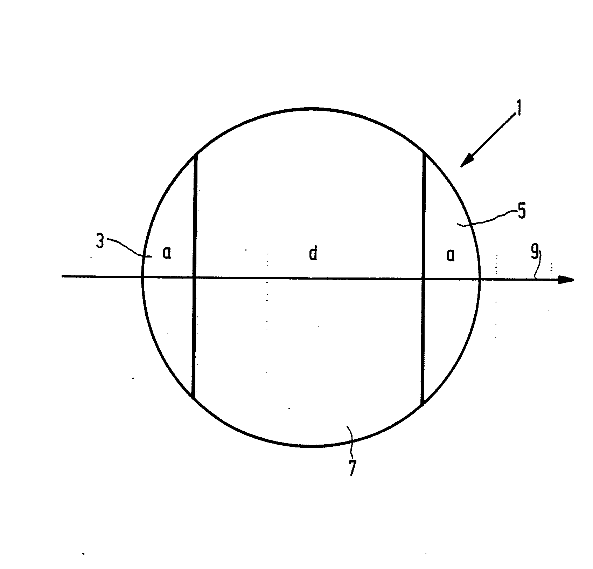

Anhand der Zeichnung wird ein Ausführungsbeispiel der Erfindung beschrieben und in ihrer Wirkungsweise erläutert.

Die Figur zeigt eine Kugellinse 1 im Schnitt mit zwei Kalotten 3,5 aus magneto-optisch wirksamem Eisen-Granat-material und einem zwischen den Kalotten 3,5 befindlichen Kugelteil 7 aus nichtmagnetischem Granatmaterial. Der Pfeil 9 bezeichnet die Richtung der Vorzugsmagnetisierung des magnetischen Materials der Kalotten 3 und 5.

a gibt die maximale Schichtdicke der Kalotten 3 und 5 an, mit d ist die Schichtdicke des zwischen den Kalotten liegenden Kugelteils 7 bezeichnet.

Die Kugellinse 1 kann auf bekannte Weise - (vergleiche z.B. Electronics Letters 18 (1982), Seiten 1026 bis 1028) in einem optischen Kommunikationssystem im Strahlengang einer Laserdiode/Monomode-Wellenleiter angeordnet werden, und wirkt dort als fokussierender optischer Isolator unter Zusammenwirken mit einem zwischen der Kugellinse und dem Monomode-Wellenleiter angeordneten Polarisator und einer Magnetisierungseinrichtung, deren magnetisches Feld die Kalotten 3 und 5 in Ausbreitungsrichtung des Lichtes durchsetzt und die Sättigungsmagnetisierung bewirkt. In Richtung der größten Dicke a der Kalotten 3 und 5 liegt eine wachstumsinduzierte magnetische Anisotropie vor. Durch geringes Verdrehen dieser Richtung aus der optischen Achse des Systems Laserdiode/Monomode-Wellenleiter wird die effektive Dicke des die Kalotten bildenden magnetischen Materials und damit die magnetooptische Drehung reduziert und damit an die Wellenlänge des eingestrahlten Lichtes angepaßt.

Die Kugellinse 1 gemäß der Figur wird wie folgt hergestellt:

Aus einer Schmelze der Zusammensetzung

| Pb | 0,3874 |
|---|---|
| B | 0,1220 |
| Gd | 0,0074 |
| Bi | 0,3463 |
| Fe | 0,1225 |
| Al | 0,0082 |
| Ga | 0,0062 |
| | 1,0000 |

(Anteile der Kationen in der Schmelze in Atom-%)

und einer Sättigungstemperatur $T_S$ von 819°C wurden nach dem aus Journal of Crystal Growth 64 - (1983) Seiten 275 bis 284 bekannten Flüssigphasenepitaxieverfahren auf horizontal gehalterten, 0,55 mm dicken (111)-orientierten $(Gd,Ca)_3(Ga,Mg,Zr)_5O_{12}$-Einkristallschieben eines Durchmessers von 30 mm als Substrat beidseitig Schichten einer Zusammensetzung entsprechend der Formel

$(Gd,Bi)_3(Fe,Ga,Al)_5O_{12}$ mit einer Schichtdicke von jeweils 160$\mu$m epitaktisch angebracht. Es ist hierbei anzumerken, daß, obwohl ein Lösungsmittel in Form von PbO und $B_2O_3$ eingesetzt wurde, der Bor- und Bleieinbau in die anwachsende Schicht so gering ist, daß er zu vernachlässigen ist. Aus den beschichteten Substraten wurden Würfel von 0,87 mm Kantenlänge gesägt, in exzentrisch rotierenden Schleiftöpfen gerundet und in Käfigen zwischen gekreuzt rotierenden Scheiben poliert. Die resultierenden Kugeln hatten einen Gesamtdurchmesser D = d + 2a von 0,8 mm mit einer maximalen Schichtdicke der Kalotten 3 und 5 a = 0,125 mm - (vergleiche Figur). Die Faraday-Rotation betrug bei einer Wellenlänge $\lambda$ = 1,3$\mu$m 1,9 × 10³ °/cm. Die Sättigungsmagnetisierung $M_S$ betrug 17 mT (bei 20°C).

**Ansprüche**

1. Vorrichtung zum Drehen der Polarisationsebene linear polarisierten Lichtes in Form einer unter Verwendung von in Durchstrahlungsrichtung vorzugsmagnetisierten magnetischem Kristallmaterial hergestellten Kugellinse,

dadurch gekennzeichnet,

daß die Kugellinse (1) aus zwei Kalotten (3,5) mit parallel zueinander und senkrecht zur Durchstrahlungsrichtung des Lichtes ausgerichteten Grundflächen aus magnetischem Granatmaterial mit einem zwischen den Kalotten befindlichen Kugelteil (7) aus optisch transparentem, nichtmagnetischem Granatmaterial besteht.

2. Vorrichtung nach Anspruch 1,

dadurch gekennzeichnet,

daß die Kalotten (3,5) aus Seltenerdmetall-Eisen-Granat bestehen.

3. Vorrichtung nach Anspruch 2,

dadurch gekennzeichnet,

daß die Kalotten (3,5) aus Wismut-substituiertem Seltenerdmetall-Eisen-Granat bestehen.

4. Vorrichtung nach Anspruch 3,

dadurch gekennzeichnet,

daß die Kalotten (3,5) aus Seltenerdmetall-Eisen-Granat entsprechend der allgemeinen Formel

$(Gd,Bi)_3(Fe,Ga,Al)_5O_{12}$ bestehen.

5. Vorrichtung nach Anspruch 1,

dadurch gekennzeichnet,

daß der zwischen den Kalotten (3,5) befindliche Kugelteil (7) aus Granatmaterial besteht, dessen Zusammensetzung der Formel entspricht $(A,B)_3(Ga,C,D)_5O_{12}$

mit A = Gd und/oder Sm und/oder Y

B,C = Ca und/oder Sr und/oder Mg

D = Zr und/oder Sn.

6. Vorrichtung nach Anspruch 5,

dadurch gekennzeichnet,

daß der zwischen den Kalotten (3,5) befindliche Kugelteil (7) aus Granatmaterial entsprechend der allgemeinen Formel $(Gd,Ca)_3(Ga,Mg,Zr)_5O_{12}$ besteht.

7. Vorrichtung nach den Ansprüchen 1,4 und 6,

dadurch gekennzeichnet,

daß die Kalotten (3,5) aus Seltenerdmetall-Eisen-Granat entsprechend der Formel $(Gd,Bi)_3(Fe,Ga,Al)_5O_{12}$) und der zwischen den Kalotten befindliche Kugelteil (7) aus Granatmaterial entsprechend der Formel

$(Gd,Ca)_3(Ga,Mg,Zr)_5O_{12}$ bestehen.

8. Vorrichtung nach einem der vorhergenden Ansprüche,

dadurch gekennzeichnet,

daß die Kalotten (3,5) eine solche maximale Gesamtschichtdicke haben, die ausreicht, die Polarisationsebene des eingestrahlten Lichtes um mehr als 45° zu drehen.

9. Verfahren zur Herstellung einer Vorrichtung nach den Ansprüchen 1 bis 8, dadurch gekennzeichnet,

daß auf den Hauptflächen eines Substrates aus optisch transparentem, nichtmagnetischem Granatmaterial epitaktisch Schichten jeweils gleicher Schichtdicke aus magnetischem Granatmaterial abgeschieden werden, daß das beschichtete Substrat in Würfel zersägt wird und daß die Würfel zu Kugeln geschliffen werden.

10. Verfahren nach Anspruch 9,

dadurch gekennzeichnet,

daß auf dem Substrat Schichten aus Seltenerdmetall-Eisen-Granat abgeschieden werden.

11. Verfahren nach Anspruch 10,

dadurch gekennzeichnet,

daß Wismut-substituierte Schichten aus Seltenerdmetall-Eisen-Granat abgeschieden werden.

12. Verfahren nach Anspruch 11,

dadurch gekennzeichnet,

daß Schichten einer Zusammensetzung entsprechend der Formel

$(Gd,Bi)_3(Fe,Ga,Al)_5O_{12}$ abgeschieden werden.

13. Verfahren nach einem der Ansprüche 9 bis 12,

dadurch gekennzeichnet,

daß die Schichten aus magnetischem Granatmaterial auf einem Substrat aus Granatmaterial entsprechend der allgemeinen Formel $(A,B)_3(Ga,C,D)_5O_{12}$

mit A = Gd und/oder Sm und/oder Y

B,C = Ca und/oder Sr und oder Mg

D = Zr und/oder Sn.

epitaktisch abgeschieden werden.

14. Verfahren nach Anspruch 13,

dadurch gekennzeichnet,

daß die Schichten auf einem Substrat abgeschieden werden, dessen Zusammensetzung der Formel $(Gd,Ca)_3(Ga,Mg,Zr)_5O_{12}$ entspricht.

15. Verfahren nach den Ansprüchen 9,12 und 14,

dadurch gekennzeichnet,

daß auf der unteren und der oberen Hauptfläche eines Substrates, dessen Zusammensetzung der Formel

$(Gd,Ca)_3(Ga,Mg,Zr)_5O_{12}$ entspricht Schichten einer Zusammensetzung entsprechend der Formel

$(Gd,Bi)_3(Fe,Ga,Al)_5O_{12}$ epitaktisch abgeschieden werden.

16. Verfahren nach den Ansprüchen 9 bis 15,

dadurch gekennzeichnet,

daß die Schichtdicke der epitaktisch abgeschiedenen magneto-optisch wirksamen Schichten so gewählt wird, daß die maximale Gesamtschichtdicke der nach dem Schleifprozeß erhaltenen Kalotten ausreicht, die Polarisationsebene des eingestrahlten Lichtes um mehr als 45° zu drehen.

17. Verwendung der Vorrichtung nach den Ansprüchen 1 bis 8 in einem optischen Isolator für den Wellenlängenbereich $1,1 \leqq \lambda \leqq 1,6\mu m$.